# EUROPEAN PATENT SPECIFICATION

(11) **EP 1 775 049 B1**
(45) Date of publication and mention of the grant of the patent: **24.12.2008**
(21) Application number: 06120589.4
(22) Date of filing: 13.09.2006
(51) Int. Cl.: B23G 1/18, B23Q 15/22

(54) **Automatic tapping apparatus**
Automatische Gewindebohreinrichtung
Dispositif pour taraudage automatique de filet

(30) Priority: 12.10.2005 IT PN20050071
(43) Date of publication of application: 18.04.2007
(73) Proprietor: BORDIGNON, Alberto, 36027 Rosa´ VI (IT); BORDIGNON, Simone, 36027 Rosa´ VI (IT)
(72) Inventor: Bordignon, Silvano, 36027 Rosà (VI) (IT)
(74) Representative: Giugni, Valter

(56) References cited:
- EP-A- 1 457 285
- JP-A- 10 100 042
- JP-A- 63 200 914
- US-A- 6 029 098

## Description

The present invention refers to an electro-mechanical tapping apparatus, intended for automatically forming internal screw threads in both blind or through holes and bores provided in a usually metal support, such as sheet-metal, said apparatus being driven by an electric motor and being provided with specific, preferably electronic controls adapted to enable the apparatus to fully automatically perform a sequence of operations aimed at tapping pre-formed holes and bores.

Various tapping machines of a largely known and widely used kind have already been disclosed in a number of publications, such as for instance the Italian patent application No. PN2001U000017, the European patent application No. EP 1 457 285, and the US patent No. 4,808,047.

The operating peculiarities, the construction features, the problems considered in that connection, and the solutions proposed to do away with such problems are all described exhaustively in the above-cited publications, so that - for reasons of brevity - they shall not be dealt with any longer in this specification.

In particular, the last two patents cited above disclose solutions, in which the tool-carrying chuck is driven to rotate at a first tapping speed and is at the same time caused to move forwards so that the tool is able to fit into the bore to be tapped; this insertion and tapping operation is continued until the whole bore has eventually been tapped, after which the tool-carrying chuck is rotated in the reverse direction, preferably at a much higher rotating speed, and is at the same time pulled out of the tapped bore.

In both above-cited patents, the rate at which the tapping tool is approached to the bore to be tapped, prior to the same tool physically engaging the bore to start the actual tapping operation, is substantially constant and equal to the speed at which the tool itself is caused to move forwards after the tapping operation has been started.

This is practically due to the circumstance that the means provided to control and regulate the speed at which the tool progresses along the bore during tapping are rather rigid, since they do not contemplate any differentiated speed at which the tool might be caused to displace in the two immediately successive bore-approaching and bore-tapping process steps of the tool.

The impossibility for the moment to be determined, at which the bore-approaching movement of the tool may be considered to have come to an end and the actual bore-tapping operation to have started, therefore determines also an impossibility for two differentiated bore-approaching and bore-tapping speeds to be defined, wherein such a tool displacement speed switch-over should take place at the moment at which the tool establishes a contact with the bore to be tapped.

As a result, the duration of the bore-approaching step performed by the tool adds up the total cycle time of the process, thereby extending the overall duration thereof and, ultimately, worsening the production efficiency as a whole.

Another drawback encountered with the solutions proposed by the afore-cited patents is connected with the ways and means used to detect the moment at which - upon conclusion of the actual tapping operation - the tool-carrying chuck must stop rotating and displacing forwards to then reverse its direction of rotation - preferably at a much higher speed - and be finally caused to move out of just tapped bore.

According to the prior art, this detection task is substantially left with a simple device in the form of a switch that is actuated by the simple contact of a member, the displacement of which - as brought about by the chuck - is such as to practically detect when the same chuck is moving over a pre-determined length of travel, which the end of the tapping operation corresponds to, and which the return travel of the tool/chuck is due to start from.

As an alternative to such solution, controlling the forward and backward displacement of the tool-carrying chuck may be implemented with other fully automatic means of an e.g. time-controlled type, a type based on pre-defined travel lengths of the chuck or, for the matter, any suitable type as largely known as such in the art, which are included in the overall processing cycle, but do not anyway depend on the intermediate position of the chuck and, in particular, the position from which the tool starts engaging the bore to be tapped.

Conclusively, it may be therefore stated that these solutions, although quite reliable and practicable, are however such as to require the provision of additional chuck-displacement detection and control devices and, therefore, impose a number of complications - along with the unavoidably resulting over-costs - from a construction point of view

It would therefore be desirable, and it is actually a main object of the present invention, to provide a solution enabling a tapping apparatus to be embodied, which is effective in doing away with the above-described drawbacks of prior-art solutions as brought about by an undifferentiated travelling rate and pattern of the tool-carrying tool during the two process steps mentioned above, and which does not require the use of any dedicated electro-mechanical devices to control the forward and backward travel of the chuck.

According to the present invention, these and further aims are reached in a kind of tapping apparatus that is provided with means for controlling and triggering the displacements and the travel rates of the chuck as described and recited in the appended claims. Features and advantages of the present invention will anyway be more readily and clearly understood from the description that is given below by way of non-limiting example with reference to the accompanying drawings, in which:

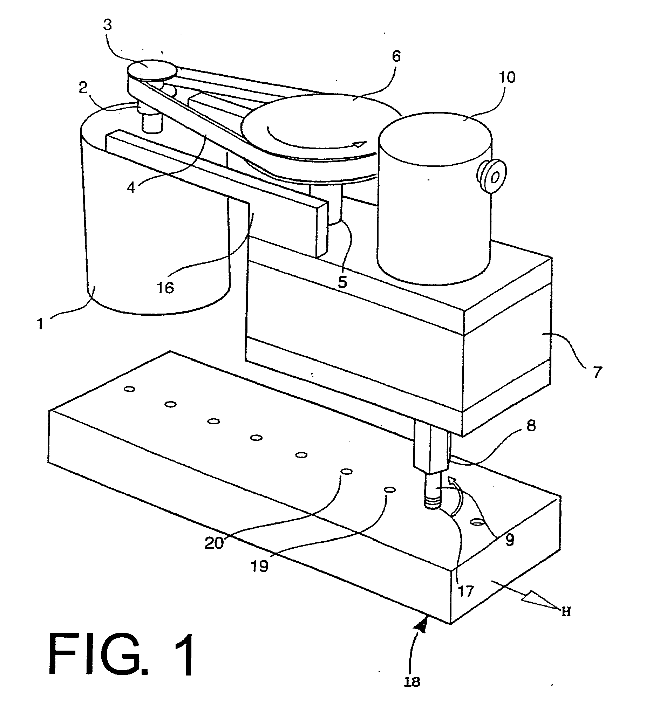

- Figure 1 is a conceptual view of a tapping apparatus adapted to be controlled and operated in accordance with the present invention;

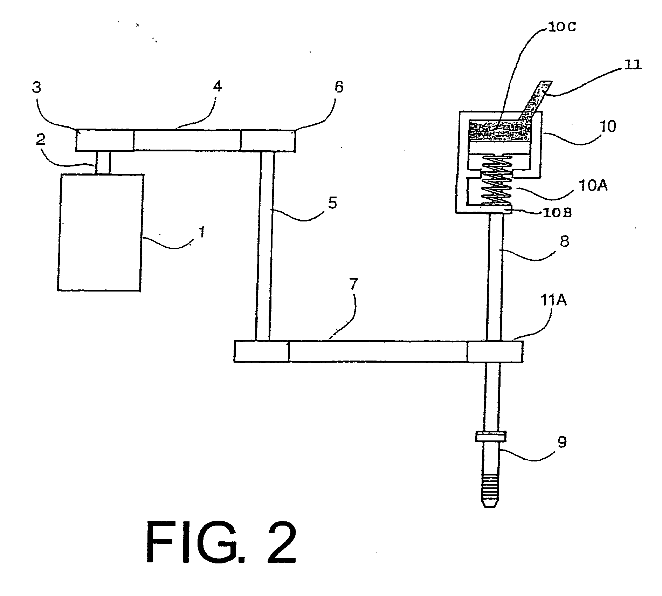

- Figure 2 is a schematical view of an exemplary assembly of the component parts of a tapping apparatus according to the present invention;
- Figure 3 is a concept view of the wiring diagram of the electric parts and the related connections of a tapping apparatus according to the present invention.

With reference to the above-listed Figures, it may be noticed that a tapping apparatus according to a preferred embodiment of the present invention comprises following devices/means:
- an electric motor 1, provided with an external rotating shaft 2,
- a pulley 3 press-fitted or shrink-fitted on to said shaft 2,
- a first belt 4 fitted on and engaging said pulley 3,
- a plurality of driving mechanisms to transmit motion to said pulley 3, as exemplified in this description by a second shaft 5,
- a second pulley 6,
- a second belt 7,
- a chuck 8 rotatably driven by said second belt 7, wherein the tapping tool 9 is applied to such chuck,
- a single-acting piston device 10, provided with an external port 11 for an actuating medium, such as preferably compressed air, to be let into the internal chamber of the same device 10, the latter being conventionally adapted to control the chuck 8 in the forward and backward displacements and the position thereof.

In addition, said device 10 is provided with a preferably pre-loaded or biasing spring 10A, which is arranged between the bottom surface of the piston and a support 10B that is firmly joined to the structure of said device 10, but within which said chuck is able to slide. In this way, when the device is in the resting, i.e. non-operative state thereof, or in the pull-out/return state (i.e. when the pressure inside the chamber 10C of the cylinder is released and the chuck is caused to displace so as to remove the tool from the bore and move backwards), the piston and the chuck associated thereto are pushed upwards by said spring and, as a result, the tool 9 is pulled out of the bore by the simple effect of said spring.

The second belt 7 is in turn so arranged as to engage a third pulley that is provided internally with a through-bore 11A, within which there is inserted said chuck 8 in such a manner as to be able to axially slide therethrough, but which is profiled so as to be complementary with the profile of the chuck and, therefore, to be able to impart the same chuck a rotary motion in both directions.

Essential to the purposes of the present invention is the kind of electric motor used in the application. In fact, as it will be possible to clearly understand later on, this motor is a brushless-type motor provided with a rotor having a very low inertia, as this is readily found on the market.

This motor is powered and operated from an electronic control and synchronizing circuit that comprises - on a conceptual basis - a device 21 for the rectification of voltage/current, an oscillatory device 22 for the generation of variable-frequency current, preferably of the square-wave type, a device 23 for the amplification of said variable-frequency current; there are further provided external means 24 for selecting and programming the generated frequency, as well as external means 25 for adjusting and controlling the current amplification by said circuit 23.

These external setting and control means 24 and 25 are controlled and governed by a general control and setting circuit 32, which can be programmed from outside, and the functions of which shall be explained in greater detail further on.

The example set forth above has been given to the mere purpose of illustrating a typical representation of a means for the generation of a driving current for the electric motor 1, which is controllable both in frequency and amplitude and is of course capable of being used to control the direction of rotation of the motor. Other circuit and/or functional embodiments are obviously possible in view of attaining the same result, i.e. generating an oscillating current that is controllable both in frequency and amplitude, in particular through the use of inverter-type circuits, such as the newly developed ones that generate the current to drive the motor without necessarily going through a direct-current generation step, but rather using directly an alternating current to produce the required oscillating current at a varying, controlled frequency.

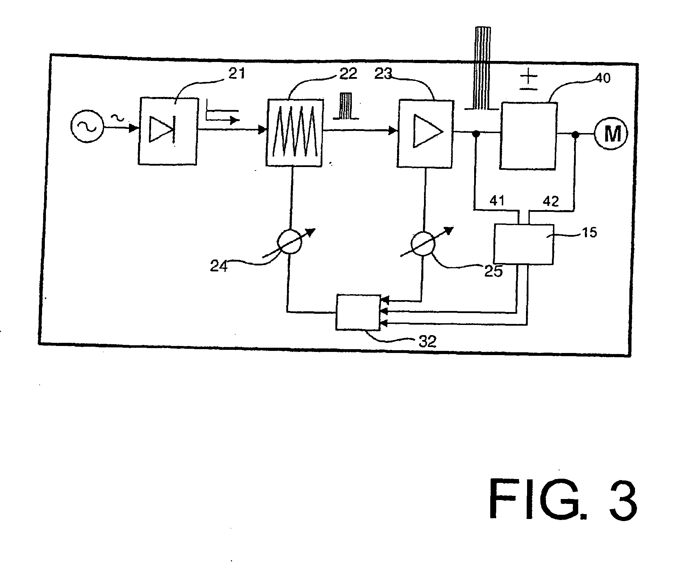

Anyway, what has been described up to this point is practically a tapping apparatus according to the prior art. According to the present invention, in fact, such tapping apparatus is also provided with a device that is adapted to detect the instant power input of said electric motor 1 and that, with particular reference to Figure 3, is indicated conventionally at 40. This measurement device 40 can be easily found on the market and be based on differentiated measurement and operating techniques.

In general, all these devices are widely known as such in the art, so that they shall not be described any further in this specification. All those skilled in the art are in fact fully capable of selecting - among the various ones available on the market - the device that most of all fits the actual application requirements while complying with particular application-related constraints as set forth above.

The purpose of such device for measuring the instant power input of the electric motor 1 is to identify the exact moment at which the tool 9, as driven by the chuck 8, enters the bore to be tapped and, as a result, engages the latter. As it shall be possible to more clearly appreciate later on in this description, the exact determination of this moment is of basic importance to the purposes of the present invention, since the subsequent operation of the tapping apparatus is in fact rigidly connected with the exact moment at which the tool engages the bore to be tapped, actually. Since the tapping apparatus itself is provided with a speed control arrangement to control the rotating speed of the chuck, as soon as the latter enters with the tool the bore to be tapped, its rotating speed tends to decrease and, in response thereto, the speed control tends to restore it to the rated value, thereby bringing about an immediate corresponding increase in the power input of the motor.

This is the actual reason why it is considered that detecting the instant power input of the motor enables a reliable indication to be provided of the exact moment at which the tool is brought into engaging the bore to be tapped and starts tapping; ultimately, it practically provides the reference clock for the subsequent processing steps.

For the determination of the actual moment at which the tool enters and engages the bore to be tapped, a threshold power value P_{S} is pre-defined, which is high enough as to ensure that, when this value is exceeded by the power input of the motor 1, the tool may be considered with certainty as having positively engaged the bore to be tapped.

The inventive tapping apparatus may therefore be also provided with a comparator circuit 15, in which said threshold power value P_{S} is stored, and to which - via appropriate connections 41 and 42 - there is delivered also a signal issued by said measurement device 40; the latter may measure either the instant power output or the current, or even the voltage. Regardless of the variable being measured, this is converted into an instant power input value, which is then compared with said threshold power value P_{S}, i.e. the value beyond which there is conventionally associated the information that the chuck and, accordingly, the tapping tool has engaged the bore to be tapped.

The way in which the above-described tapping apparatus works is as follows: in an initial step of the process, the electric motor 1 - via said means 2 through to 7, drives the chuck 8 to rotate in a pre-established direction and, at the same time, under the action of the device 10 the tool 9 is suitably approached to and eventually inserted in the bore being processed 17, so as to tap it as planned.

As this has already been indicated hereinbefore, the bores to be tapped are in particular provided in a kind of support such as the plate 18 shown in the Figures. This plate is of a material such as sheet-steel of a conventional kind, usually a mass-produced hot-rolled sheet-steel, in which the need arises to automatically provide a great number of tapped holes or bores. This in turn makes it necessary for all processing steps connected therewith to be optimized from an industrial point of view.

In the above-noted first process step, the electric motor 1 is powered and operated so that - via the various drive and motion transmission devices provided therebetween - a minimum torque is produced on the chuck 8, i.e. a torque that is just sufficient to enable the chuck to rotate under idling conditions, i.e. the conditions brought about by the tool 9 having not yet engaged the bore to be tapped.

In fact, in this first step of the process the tool is assumed to be still relatively far from the bore to be tapped, so that the required torque is of course the minimum one that would just allow the - usually negligible - internal frictions and resistances of the motor and the kinematic drive chain to be overcome.

As a result, owing to the required torque in this step being very low, the power input of the motor is correspondingly small; therefore, said pre-established threshold power value P_{S} is selected so as to lie adequately above the value of the motor power input under said idling conditions thereof, i.e. when the motor is driven to rotate under no-load conditions.

Under the circumstances, therefore, the afore-mentioned comparator circuit 15 will not generate any particular signal, so that the motor keeps on rotating at a pre-established speed under a minimum current input.

As far as said first process step is further concerned, the forward displacement speed of the chuck, as determined by the device 10, may be either held at a pre-set value or be freely variable. However - and this is one of the peculiar advantages of the present invention, actually - such forward displacement of the chuck under no-load conditions may be set to occur at a sensibly higher speed than the one at which the same chuck displaces when the tool is actually tapping the bore, since in this first step of the process there is no resisting moment acting on the tool, owing to the latter being not yet engaged in the bore to be tapped.

In a subsequent second step of the process, the tool comes into contact with the bore to be tapped and its resistance to rotation rises abruptly. As a result, for a pre-established speed to be kept up, and since the motor is speed-controlled, the power input of the motor increases in a sensible and predictable manner, and this circumstance is readily detected by the device 40.

Such abrupt rise in the motor power input is immediately detected and sent - in any of a number of manners that are largely known as such in the art - to said setting and control circuits 32 to have the mode in which the motor is powered and, therefore, operated changed accordingly.

From this moment on, said control circuits 32, and the power-supply means associated thereto, will obviously supply the motor with a voltage - or a power, depending on the kind of control implemented - having characteristics that are fully similar to the ones that would be supplied without the present invention, as required to enable the motor to rotate at the pre-set working speed under load conditions. The motor 1 is further provided with related means - as generally known as such in the art, e.g. in the form of encoders, Hall cells, pulse counters, and the like - that are adapted to count the cumulative number of revolutions performed by the related chuck starting from a given instant.

If use is therefore made of the instant identified by the abrupt rise in the motor power input - as brought about by the tool carried by said chuck entering and engaging the bore due to be tapped - and a pre-established number of revolutions performed by the chuck - and calculated on the basis of the actual pitch of the threads to be cut - is counted starting from such instant, an information is produced relating to the travel length covered by the chuck, or the depth reached by the same chuck, starting of course from the beginning of the tapping operation.

The tapping operation itself goes on until the total number of revolutions completed by the chuck reaches up to a pre-established value corresponding to the length of the tapping travel to be covered or the number of threads to be cut.

Such occurrence is determined through a comparison made with the aid of means that are widely known as such in the art and, therefore, shall not be described to any further extent in this specification.

Upon reaching said pre-established cumulative number of revolutions completed by the chuck, i.e. upon completion of the tapping operation, said setting and control means 32 - as suitably activated by an appropriate electric signal (not shown) - generate and issue in turn signals and related commands adapted to cause the motor 1 to reverse the direction of rotation thereof.

As a result, being in this way caused to rotate in a reverse direction than the tapping one, the tool 9 withdraws completely from the just tapped bore by spontaneously unscrewing therefrom. In turn, the control circuit 32 generates - and supplies to the motor 1 - a supply voltage having such polarity/phase and amplitude as to at this point exert on the chuck a torque that can be quite modest now, as long as it proves adequate to just enable the tool to unscrew from the bore, while on the contrary driving the same chuck to rotate at a much higher speed than the tapping speed; this is now possible since, owing to no resisting moment existing any longer (the tool must in fact be just unscrewed from threads that have already been cut and formed), it just takes a very low torque to bring about a high unscrewing speed. In addition, said electric motor is of the type having a rotor with a very low inertia, as it is widely available on the market nowadays. These motors are in fact particularly adapted to very quickly reverse the direction of their rotation, without involving any excessive energy usage and any prohibitive space requirements.

The above-described implementation technique may of course be subject to, and in fact allows for, a number of modifications, different embodiments and improvements. In particular, the single-acting piston device 10 and the spring 10A may most effectively be replaced by a double-acting piston device, in which the piston stroke is controllable in both directions by adjusting the pressure and the flow-rate of the operating medium (usually compressed air), which alternately fills the two chambers situated at the opposite sides of the common piston; anyway, such double-acting piston devices are largely known as such in the art, so that they shall not be described any further.

It may furthermore be noticed that, for the inventive tapping apparatus to be able to work correctly, all it takes is to properly adjust the frequency and amplitude settings of the motor power-supply device, further of course to the threshold value of the instant power input of the motor, while it is no longer necessary for means and ways to be provided in view of causing the chuck to cover a pre-defined travel length prior to starting the tapping operation, since - as already noted hereinbefore - the tapping operation starts, is controlled and ends automatically starting from the moment at which the tool enters and engages the bore to be tapped.

As already indicated at the beginning of this description, the present invention applies to tapping processes that may involve both blind bores and through-bores. In fact, a major advantage of the present invention lies in the fact that, once the tapping starting moment (i.e. the moment at which the tool carried by the chuck enters and engages the bore to be tapped, thereby giving rise to an occurrence that is detected in the same manner for both kinds of bores) has been properly identified, the subsequent processing steps will solely depend on the cumulative number of revolutions performed by the chuck, further to - obviously - the way in which said control means and circuits 32 have been set and programmed, and not the way in which the motor power input changes or the travel length of the chuck.

## Claims

1. Automatic apparatus for tapping both blind and through bores and holes, comprising:
- an electric motor (1) adapted to rotate in both directions of rotation in a selectively pre-definable manner,
- a chuck (8) for carrying the tapping tool (9), which is rotatably driven by said electric motor (1) even in an indirect way via appropriate kinematic means (2, 3, 5, 7),
- a chuck-displacement device (10), preferably of the pneumatic type, adapted to receive a command directed at triggering and governing the translational motion of said chucks (8) and causing said chuck (8) to move towards and away from the respective bore to be tapped,
- setting and control circuits (32) adapted to control the rotation of said electric motor (1) during the tapping operation and during the tool (9) withdrawal/unscrewing step in two respective directions,
means adapted to detect, during the step in which the chuck (8) moves to approach the bore to be tapped, the moment at which the same chuck (8) starts to engage the bore to be tapped or the position of said chuck (8) at that moment **characterized in that** said circuits (32) include a detection device (40) for measuring the instant power input of said electric motor (1), and comparator means (15) for comparing said measured instant power input of the motor (1) with a threshold power value (Pₛ) that corresponds to the motor power input at the moment in which said tool (9) carried by said chuck (8) engages the bore to be tapped and starts tapping.

2. Automatic tapping apparatus according to claim 1, **characterized in that** when the state or the moment is detected, at which said instant power input of the motor (1) is measured to exceed said preestablished threshold power value (Pₛ), a corresponding pre-defined signal is generated and sent to said setting and control circuits (32).

3. Automatic tapping apparatus according to claim 2, **characterized in that** there are provided counter means associated to the rotation of said chuck (8), and **in that**, by virtue of said pre-defined signal, said counter means are adapted to count the revolutions performed by the chuck (8) and output said instant information to said setting and control circuits (32), until a pre-set number of revolutions of said chuck (8) is eventually reached.

4. Automatic tapping apparatus according to claim 3, **characterized in that** when said pre-set number of revolutions of said chuck (8) is eventually reached, said setting and control circuits (32) generate corresponding operating signals that cause the electric motor (1) to first stop and then reverse its direction of rotation in a sequence,

5. Automatic tapping apparatus according to any of the preceding claims, **characterized in that** the speed of the forward displacement of the chuck (8) until said moment or position at which said instant power input of the electric motor is detected to rise above said threshold power value (Pₛ), is different from the displacement speed of the same chuck (8) after said moment or position has been reached.

## Patentansprüche

1. Automatische Vorrichtung zum Gewindeschneiden sowohl in Sack- als auch Durchgangsbohrungen und-löchern, aufweisend:
einen Elektromotor (1), der ausgebildet ist, sich in beide Drehrichtungen in wahlweise vordefinierbarer Weise zu drehen,
ein Spannfutter (8), welches das Gewindeschneidwerkzeug (9) trägt und das durch den Elektromotor (1) drehbar angetrieben wird, und zwar sogar in indirekter Weise über eine geeignete kinematische Einrichtung (2, 3, 5, 7),
eine Spannfutter-Verschiebungsvorrichtung (10), vorzugsweise vom pneumatischen Typ, die ausgebildet ist, einen Befehl zu empfangen, der auf ein Auslösen und Regeln der Translationsbewegung des Spannfutters (8) gerichtet ist und das Spannfutter (8) veranlasst, sich zur jeweiligen Bohrung, bei der ein Gewindeschneiden vorgenommen werden soll, und von dieser weg zu bewegen,
Einstell- und Steuerschaltkreise (32), die ausgebildet sind, die Rotation des Elektromotors (1) während der Gewindeschneidoperation und während des Schrittes des Zurückziehens/Herausschraubens des Werkzeuges (9) in zwei jeweiligen Richtungen zu steuern,
eine Einrichtung, die ausgebildet ist, um, während des Schrittes, bei dem sich das Spannfutter (8) bewegt, um sich an die Bohrung anzunähern, bei der das Gewindeschneiden vorgenommen werden soll, den Moment zu erfassen, bei dem dieses Spannfutter (8) beginnt, mit der Bohrung, bei der das Gewindeschneiden vorgenommen werden soll, in Eingriff zu kommen, oder die Position des Spannfutters (8) zu diesem Moment zu erfassen,
**dadurch gekennzeichnet, dass** die Schaltkreise (32) eine Erfassungsvorrichtung (40), welche die momentane Eingangsleistung des Elektromotors (1) misst, und eine Vergleichseinrichtung (15) beinhaltet, welche die gemessene momentane Eingangsleistung des Motors (1) mit einem Leistungsschwellenwert (Pₛ) vergleicht, welcher der Motoreingangsleistung zu dem Moment entspricht, bei dem das von dem Spannfutter (8) getragene Werkzeug (9) mit der Bohrung, bei der das Gewindeschneiden vorgenommen werden soll, in Eingriff kommt und mit dem Gewindeschneiden beginnt.

2. Automatische Gewindeschneidvorrichtung nach Anspruch 1, **dadurch gekennzeichnet, dass**, wenn der Zustand oder der Moment erfasst wird, bei dem die gemessene momentane Eingangsleistung des Motors (1) den vorbestimmten Leistungsschwellenwert (Pₛ) überschreitet, ein entsprechendes vordefiniertes Signal erzeugt wird und an die Einstell- und Steuerschaltkreise (32) gesendet wird.

3. Automatische Gewindeschneidvorrichtung nach Anspruch 2, **dadurch gekennzeichnet, dass** eine Zähleinrichtung vorgesehen ist, die der Rotation des Spannfutters (8) zugeordnet ist, und dass, Dank des vordefinierten Signals, die Zähleinrichtung ausgebildet ist, die vom Spannfutter (8) durchgeführten Umdrehungen zu zählen und die momentane Information an die Einstell- und Steuerschaltkreise (32) auszugeben, bis eine voreingestellte Anzahl von Umdrehungen des Spannfutters (8) schließlich erreicht wird.

4. Automatische Gewindeschneidvorrichtung nach Anspruch 3, **dadurch gekennzeichnet, dass**, wenn die voreingestellte Anzahl von Umdrehungen des Spannfutters (8) schließlich erreicht wird, die Einstell- und Steuerschaltkreise (32) entsprechende Operationssignale erzeugen, die den Elektromotor (1) veranlassen, als Erstes abzustoppen und dann in einer Abfolge seine Drehrichtung umzukehren.

5. Automatische Gewindeschneidvorrichtung nach einem der vorhergehenden Ansprüche, **dadurch gekennzeichnet, dass** die Geschwindigkeit der Vorwärtsverschiebung des Spannfutters (8) bis zu dem Moment oder der Position, bei dem/der erfasst wird, dass die momentane Eingangsleistung des Elektromotors über den Leistungsschwellenwert (Pₛ) ansteigt, sich von der Verschiebungsgeschwindigkeit dieses Spannfutters (8) nach Erreichen des Momentes oder der Position unterscheidet.

## Revendications

1. Dispositif automatique pour taraudage d'alésages et de trous borgnes et traversants, comprenant :
- un moteur électrique (1) adapté pour tourner dans deux directions de rotation d'une manière pouvant être prédéfinie sélectivement,
- un porte-outil (8) pour porter l'outil de taraudage (9), qui est entraîné en rotation par ledit moteur électrique. (1) même d'une façon indirecte via des moyens cinématiques appropriés (2,3,5,7).
- un dispositif de déplacement du porte-outil (10), de préférence du type pneumatique, adapté pour recevoir une command destinée à déclencher et à gouverner le mouvement de translation dudit (8) et provocant le déplacement dudit porte-outil (8) en avant et en s'éloignant de l'alésage respectif à tarauder,
- des circuits de réglage et de commande (32) adaptés pour commander la rotation dudit moteur électrique (1) pendant l'opération de taraudage et pendant l'étape de retrait-dévissage de l'outil (9) dans les deux directions respectives,
- des moyens adaptés pour détecter, pendant l'étape au cours de l'aquelle le le porte-outil (8) se déplace pour approcher l'alésage à tarauder, le moment auquel ce même porte-outil (8) commence à engager l'alésage à tarauder ou la position dudit porte-outil (8) à ce moment, **caractérisé en ce que** lesdits circuits (32) incluent un dispositif de détection (40) pour mesurer la puissance absorbée instantanée dudit moteur électrique (1) et des moyens de comparaison (15) pour comparer ladite puissance absorbée instantanée mesurée du moteur (1) avec une valeur de puissance seuil (Ps) qui correspond à la puissance absorbée du moteur au moment auquel ledit outil (9) porté par ledit porte-outil (8) s'engage dans l'alésage à tarauder et commence le taraudage.

2. Dispositif automatique de taraudage selon la revendication 1, **caractérisé en ce que** lorsque l'état ou le moment est détecté, auquel on mesure que ladite puissance absorbée instantanée du moteur (1) dépasse ladite valeur de puissance seuil (Ps) pré-établie, un signal correspondant pré-défini est généré et envoyé aux dits circuits de réglage et de commande (32).

3. Dispositif automatique de taraudage selon la revendication 2, **caractérisé en ce qu'**on prévoit des moyens de comptage associés à la rotation dudit porte-outil (8), et **en ce que**, en vertu dudit signal pré-défini, lesdits moyens de comptage sont adaptés pour compter les révolutions réalisées par le porte-outil (8) et transmettre ladite information instantanée aux dits circuits de réglage et de commande (32), jusqu'à ce qu'un certain nombre pré-reglé de révolutions dudit porte-outil (8) soit finalement atteint.

4. dispositif automatique de taraudage selon la revendication 3, **caracterisé en ce que** lorsque ledit, nombre pré-réglé de révolutions dudit porte-outil (8) est finalement atteint, lesdits circuits de réglage et de commande (32) génèrent des signaux d'actionnement correspondants qui provoquent successivement d'abord l'arrêt du moteur électrique (1), puis l'invertion de sa direction de rotation.

5. Dispositif automatique de taraudage selon l'une quelconque des revendications précédentes, **caractérisé en ce que** la vitesse du déplacement en avant du porte-outil (8) jusqu'audit moment auquel ou jusqu'à ladite position à laquelle on détecte que ladite puissance absorbée instantanée du moteur électrique dépasse ladite valeur de puissance seuil (Ps), est différente de la vitesse de déplacement de ce même porte-outil (8) après que ledit moment ou ladite position a été atteint(e).
